Europäisches Patentamt

European Patent Office

Office européen des brevets

(11) Publication number: **0 199 760 B1**

## EUROPEAN PATENT SPECIFICATION

(45) Date of publication of patent specification: **15.04.92**  (51) Int. Cl.⁵: **G01N 27/04**, G01N 27/07

(21) Application number: **85905177.3**

(22) Date of filing: **07.10.85**

(86) International application number:
**PCT/US85/01946**

(87) International publication number:
**WO 86/02453 (24.04.86 86/09)**

(54) **DUST FLOW INDUCING MONITOR.**

(30) Priority: **09.10.84 US 658586**

(43) Date of publication of application:
**05.11.86 Bulletin  86/45**

(45) Publication of the grant of the patent:
**15.04.92 Bulletin  92/16**

(84) Designated Contracting States:
**AT BE CH DE FR GB IT LI LU NL SE**

(56) References cited:
**DE-B- 1 181 944**
**GB-A- 1 087 609**

**STAUB, vol. 23, no. 2, February 1963, pages 115-118; A. SCHÜTZ: "Registrierende Messung kleinster Staubkonzentrationen hinter Filtern"**

(73) Proprietor: **AUBURN INTERNATIONAL, INC.**
**8 Electronics Avenue**
**Danvers Massachusetts 01923(US)**

(72) Inventor: **NEWTON, Robert, E.**
**Auburn International, Inc.**
**One Southside Drive Danvers, MA 01923(US)**
Inventor: **GIRGENTI, Russell, S.**
**Auburn International, Inc.**
**One Southside Drive Danvers, MA 01923(US)**

(74) Representative: **Jones, Ian et al**
**POLLAK MERCER & TENCH High Holborn**
**House 52-54 High Holborn**
**London WC1V 6RY(GB)**

**Description**

The present invention relates to apparatus for detection of dust concentration.

The apparatus of the invention can be employed to determine a margin of safety relative to hazardous (explosive, suffocating, toxic, etc.) dust concentrations. The invention has application in grain silos, mineral storage bins, industrial process and heater exhaust ducts, freighter hulls, and other environments where dust concentration must be monitored and controlled. The grain industry, for example, is one that has been plagued by random situations of build-up of explosive concentrations of grain dust in storage silos.

The invention is accordingly concerned with the provision of apparatus which enables effective monitoring of dust concentrations, for example, in silos and the like.

There is known from DE-B-1 181 944 an apparatus for detecting the concentration of dust particles suspended in a gas volume, the apparatus comprising a venturi nozzle means for inducing a stream of the gas to flow through the nozzle, and sensor means responsive to the presence of moving duct particles in the gas stream to provide an electric signal dependent on dust particle concentration in the stream. Also, measuring apparatus is known from an article by A. Schutz in STAUB, vol.23 No.2 February 1963 at pages 115-118, in which dust particles at high speed are arranged to strike a metal wire to produce an electric charge.

According to the invention, there is provided an apparatus of the kind known from DE-B-1 181 944 which is characterised in that an apparatus for detecting the concentration of dust particles suspended in a gas, the apparatus comprising:

a venturi nozzle,

means for inducing a stream of the gas to flow through the nozzle, and

sensor means responsive to the presence of moving dust particles in the gas stream to provide a triboelectric signal dependent on dust particle concentration in the stream,

characterised in that:

the venturi nozzle is located within a volume (D) of the gas,

the sensor means is carried by and located within the venturi nozzle,

the venturi nozzle has an internal flow inductor providing a negative pressure for causing a small portion of the gas volume to flow in the stream through the nozzle and past the sensor means at a velocity of at least 305 metres per minute, and

means is provided for providing an alarm output if the electric signal exceeds a predetermined value.

An apparatus embodying the invention can be located at one or more significant locations to produce acceleration localized of a portion of the air (or other gas medium) of a grain elevator or other enclosed volume. The conditions of acceleration are such that (a) the accelerated gas does not substantially change its concentration of dust and (b) the velocity of gas is within a range for effective utilization of tribo electric charge transfer with respect to the sensor means in the accelerated gas stream. The annular floor inductor is conveniently supplied with compressed air or other inert gas. The sensor means or electrode is located in the throat (smallest diameter) portion of the venturi tube to ensure maximum velocity past the electrode. The dust particles rubbing the surface of the electrode cause a small charge transfer to occur between the electrode and the particle.

The charge imparted to the electrode can be conducted to Earth through electronic control circuitry via an interconnecting shielded cable. The front end of the electronic control circuitry can be an adjustable sensitivity current-to-voltage conversion circuit, whose sensitivity is adjustable over a one hundred to one range. The circuit is constructed with current limiting resistors to produce intrinsic safety at the sensing electrode.

A second stage of the circuit provides rectification since either polarity of the charge transfer could occur at the sensing electrode. The rectification is followed by an adjustable time constant to remove background noise. When the average signal exceeds a given (e.g., 3 volt) threshold, an alarm relay is energized, which may in turn, sound an alarm, start vent fans or shut-down a process.

The invention thus provides apparatus affording an inexpensive, reliable measure of dust concentration.

The invention is further explained below by way of example, with reference to the accompanying drawings, in which:

Fig. 1 is a cross-section sketch of an apparatus embodying sensor assembly of the invention;

Fig. 2 is a block diagram of circuitry included in the apparatus of Fig. 1; and

Fig. 3 shows a modified form of the apparatus of Fig. 1, with sensitivity.

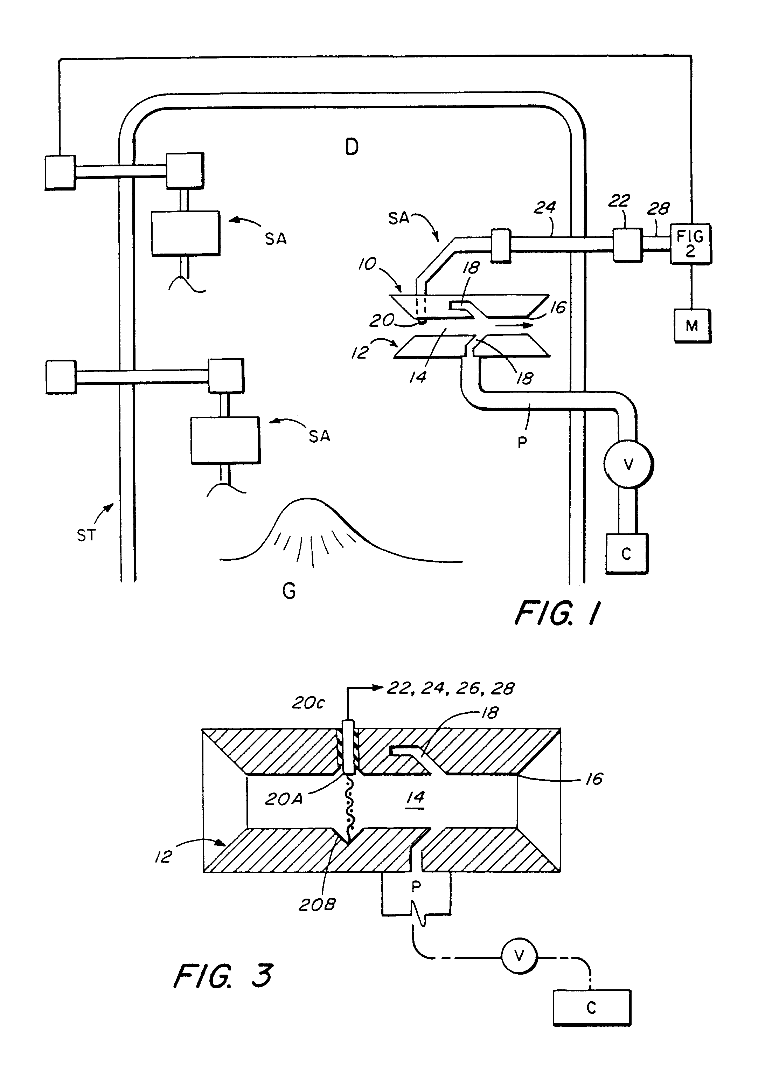

Fig. 1 shows a storage elevator ST containing a piled particulate substance G, e.g. grain with an overhead inevitable dust environment D. A series of sensor assemblies SA, are distributed in volume D for mapping dust concentration. Each sensor assembly comprises a venturi nozzle 10 with an inlet converging section 12, a throat 14, and a diverging outlet section 16. An annular flow channel 18 feeds compressed gas (from a source C via a pipe P and control valve V) to the interior of the venturi to create an annular high speed flow which stays along all of throat 14 by Coanda effect and creates a suction drawing dust-laden air from volume D through the interior of the nozzle.

A sensor electrode 20 is inserted in the nozzle and connected to circuit elements 22 and 26 via shielding cabling, a low noise coaxial cable, 24. The flow of compressed gas through the annular channel 18 causes ambient dust D to be sucked into converging section 12 and impinge on sensor electrode 20 thereby creating a triboelectric signal. Further cabling 28 connects various assemblies SA to control and signalling apparatus which opens vents, starts and stops filling, etc. and/or operates an alarm A. An optional analog voltage signal may be employed to operate a meter M as an indication of the dust level at the sensor electrode.

The air flow through the sensor assembly has a velocity over the electrode 20 of at least 305 m. (1,000 ft) per minute, preferably 610 to 915 m. (2,000 to 3,000 ft) per minute, which ensures good sensitivity to dust particles in the atmosphere surrounding the sensor as well as preventing the build up of material around the electrode. The electrode is placed up stream of the drive air inlet so that condensates or other contaminates in the drive air do not foul the electrode. Inlet blocked off pressure is -1.27 to -3.81 cm. (-.5 to -1.5 inches) $H_2O$ and velocity 1 cm. for the outlet is 457.5 to 579.5 m. (1500 to 1900 ft) per minute.

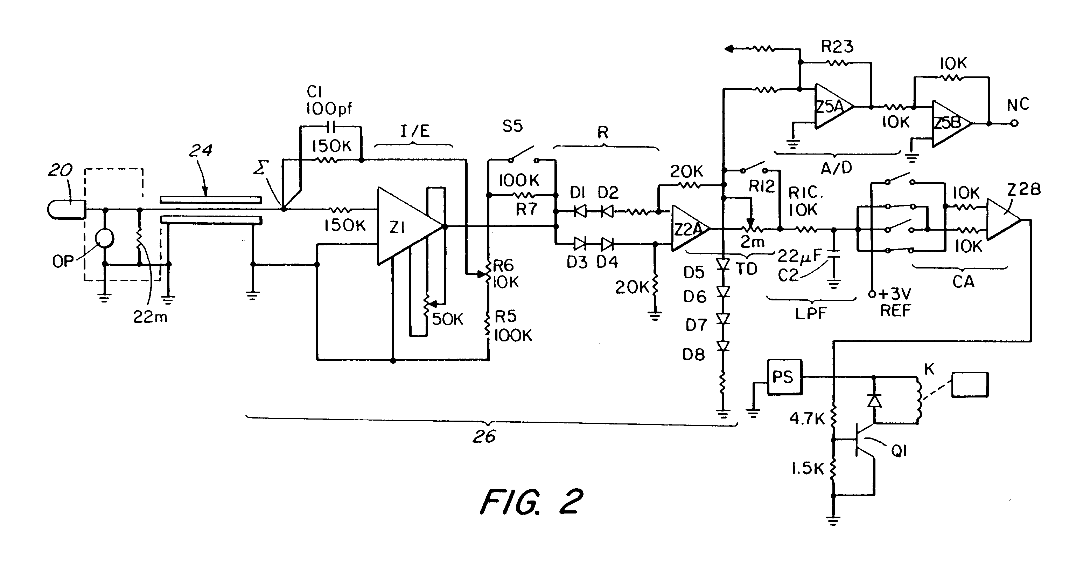

Fig. 2 is a diagram of the circuit for processing the signal from the sensor. The current resulting from the charge transfer at the sensor electrode 20 is conducted through the low noise coaxial cable 24 to current to voltage converter I/E comprising an operational amplifier ZI, which converts the current signal into a voltage signal and provides amplification of $1 \times 10^{-8}$ to $1 \times 10^{-12}$ amperes per volt which is selectable in three adjustable ranges.

The rectifier stage R provides a unipolar signal regardless of the polarity of charge transfer occurring at the sensor probe. Time delay circuit TD smoothes the inherently noisy signal from the rectifier R and is adjusted as required to prevent false alarming due to normal short term dust conditions. TD is adjustable from 0.5 to 20 seconds.

The comparator CA compares the signal from TD with a constant 3 volt reference, and when the signal exceeds the reference, relay K is energized. The relay contacts (two single pole double throw) are used to control fans, vents, alarms, etc.

An optional analog output circuit AO provides a $+O$ to 10 volt output at OC representing the level fo dust concentration at the sensor probe.

The control circuit's front end elements are in a sensor probe connection box 42 and include a bleed resistor 22 m. or over-voltage protection device OPV (dependent upon sensitivity range) used to prevent voltage build-up on the probe if the cable 24 should become disconnected.

The current to voltage conversion circuit I/E provides a virtual ground summing junction () at the cable input. Two 150K resistors act to prevent damage to OP-AMP ZI and provides an intrinsically safe connection for the cable 24. A 100 M ohm Feedback resistor in conjunction with a voltage divider comprising R5, R6, and R7, controls the conversion gain of the circuit. R6 provides 100 to 1 adjustment and R7 is controlled by S5 which provides an additional factor of ten. C1 acts to limit high frequency noise.

The rectified signal is passed via time delay means to signal level indicator circuits. Cascaded diodes D1 and D2 and D3 and D4 are employed to produce an approximate one volt deed band to allow for temperature induced zero offset of the converter circuit.

OP-AMP Z 2A provides a low impedance output to drive the time delay circuit TD which is comprised of R12, R13 and C2 and a signal level indicator circuit consisting of a LED D5 and diodes D6, D7 and D8 and R21. R12, R13 and C2 and a signal level indicator circuit consisting of a LED D5 and diodes D6, D7 and D8 and R21. R12, R13, and C2 form a low pass filter LPF to smooth variations in the signal level at the output of Z2, with R13 providing a minimum time delay of 0.5 seconds and R12 being adjustable to provide a maximum delay of 20 seconds.

D6, D7 and D8 provide an additional threshold voltage for G so that a signal is not indicated until it reaches a level sufficient for alarm generation. Also shown in FIG. 2 is a schematic of the comparator circuit C which compares the signal at C2 and a 3 volt reference. When the signal exceeds the reference the output of Z2B changes from negative to positive causing transistor Q1 to energize relay K1.

The analog output circuit OA comprises OP AMP Z5A, in conjunction with C7, R22 and R23, form an averager circuit with a 1.5 second time constant to smooth the signal from the rectifier circuit. The averaging stage inverts the signal polarity; thus OP AMP Z5B is connected as an inverter to restore the signal polarity and provide a buffered positive output voltage signal at OC representing the dust loading at the sensor probe.

The active elements of the circuit are:

3

Z1 – BURR-BROWN
OPA-104CM

Z4 – NATIONAL SEMI-
LM79L12ACZ
(NOT SHOWN)

Z2 – RCA
CA3240E

Z5 – RCA
CA3240E

Z3 – NATIONAL SEMI-
LM781SACZ
(NOT SHOWN)

Q1 – PN2222A

The passive elements are shown on the drawing.

Fig. 3 shows a modified embodiment of the sensor usable in the apparatus of the invention as a whole, which utilizes an isolated screen form electrode 20A, seated in an insulating annulus and electrically connected via a feed line 20C to components corresponding to components 22--28 of Figs. 1 and 2, in addition to or in lieu of the probe electrode 20 of Figs. 1-2. The combination of screen form electrode and induced flow affords an order of magnitude (10x) or substantially more, e.g., two orders (100x), enhancement of sensitivity.

The sensitivity is enhanced that the usage of the sensor expands to many applications outside the silo context, e.g., small part per million concentrations of dust or lint in laboratory, medical and semiconductor production clean rooms.

**Claims**

1. An apparatus for detecting the concentration of dust particles suspended in a gas, the apparatus comprising:
   a venturi nozzle (10),
   means (18) for inducing a stream of the gas to flow through the nozzle, and
   sensor means (20;20A) responsive to the presence of moving dust particles in the gas stream to provide a triboelectric signal dependent on dust particle concentration in the stream,
   characterised in that:
   the venturi nozzle (10) is located within a volume (D) of the gas,
   the sensor means (20,20A) is carried by and located within the venturi nozzle,
   the venturi nozzle has an internal flow inductor (18) providing a negative pressure for causing a small portion of the gas volume to flow in the stream through the nozzle and past the sensor means at a velocity of at least 305 metres per minute, and
   means is provided for providing an alarm output if the electric signal exceeds a predetermined value.

2. An apparatus as claimed in claim 1 wherein the flow inductor comprises a gas flow inductor (10,14,16,18).

3. An apparatus as claimed in claim 2 wherein the gas flow inductor comprises an annular flow channel (18) of the throat of the venturi nozzle (10).

4. An apparatus as claimed in claim 1, 2 or 3 wherein the sensor means comprises an electrode probe (20) in the inlet section of the venturi tube.

5. An apparatus as claimed in claim 1, 2 or 3 wherein the sensor means comprise a porous electrode (20A) subtending a portion of the cross-section of the stream.

6. An apparatus as claimed in claim 5 wherein the porous electrode comprises a screen electrode (20A) fully spanning the cross-section of the stream and located upstream of the flow inductor (18).

EP 0 199 760 B1

7. An apparatus as claimed in any preceding claim wherein the cross-section is less than 6.54 cm$^2$.

8. An apparatus as claimed in any preceding claim wherein the gas stream velocity is 610 to 915 m. per minute.

9. An apparatus as claimed in any preceding claim having spaced therefrom within the volume (D) of the gas at least one like apparatus.

**Revendications**

1. Appareil pour la détection de la concentration de particules de poussière en suspension dans un gaz, l'appareil comprenant :
   une tuyère de venturi (10),
   des moyens (18) d'induction d'une circulation d'un courant du gaz dans la tuyère, et
   des moyens de détection (20;20A) qui répondent à la présence de particules de poussière en mouvement dans le courant de gaz de manière à fournir un signal tribo-électrique dépendant de la concentration des particules de poussière dans le courant de gaz,
   caractérisé en ce que :
   la tuyère de venturi (10) est placée à l'intérieur d'un volume (D) du gaz,
   les moyens de détection (20;20A) sont portés par la tuyère de venturi et placés à l'intérieur de celle-ci,
   la tuyère de venturi comporte des moyens internes d'induction de circulation (18) qui engendrent une pression négative entraînant la circulation d'une petite partie du volume de gaz dans le courant à travers la tuyère et devant les moyens de détection, à une vitesse d'au moins 305m/min,
   des moyens sont prévus pour produire un signal d'alarme si le signal électrique dépasse une valeur prédéterminée.

2. Appareil suivant la revendication 1, dans lequel les moyens d'induction de circulation comprennent des moyens d'induction à écoulement de gaz (10, 14,16,18).

3. Appareil suivant la revendication 2, dans lequel les moyens d'induction à écoulement de gaz comprennent un canal d'écoulement annulaire (18) autour du col de la tuyère de venturi (10).

4. Appareil suivant la revendication 1, 2 ou 3, dans lequel les moyens de détection comprennent une sonde formant électrode (20) placée dans la partie d'entrée de la tuyère de venturi.

5. Appareil suivant la revendication 1,2 ou 3, dans lequel les moyens de détection comprennent une électrode poreuse (20A) sous-tendant une partie de la section transversale du courant de gaz.

6. Appareil suivant la revendication 5, dans lequel l'électrode poreuse comprend une électrode en forme de grille (20A) s'étendant dans toute la section transversale du courant de gaz et placée en amont des moyens d'induction de circulation (18).

7. Appareil suivant l'une quelconque des revendications précédentes, dans lequel la section transversale est inférieure à 6,54 cm$^2$.

8. Appareil suivant l'une quelconque des revendications précédentes, dans lequel la vitesse du courant de gaz est de 610 à 915 m/min.

9. Appareil suivant l'une quelconque des revendications précédentes, à distance duquel au moins un appareil semblable est placé à l'intérieur du volume (D) du gaz.

**Patentansprüche**

1. Vorrichtung zum Feststellen der Konzentration von in einem Gas suspendierten Staubpartikeln, wobei die Vorrichtung aufweist:

   eine Venturidüse (10),

5

ein Mittel, welches das Fließen eines Stroms des Gases durch die Düse hervorrufen, und

ein Sensormittel (20, 20A), welches auf die Anwesenheit sich in dem Gasstrom bewegender Staubpartikel anspricht, um hiedurch in Abhängigkeit von der Konzentration der Staubpartikel in dem Strom ein reibungselektrisches Signal zu erzeugen,

dadurch gekennzeichnet, daß

die Venturidüse (10) innerhalb eines Volumens (D) des Gases angeordnet ist,

das Sensormittel (20, 20A) von der Venturidüse gehalten und innerhalb derselben angeordnet ist,

die Venturidüse einen inneren Flußinduktor (18) besitzt, welcher einen Unterdruck liefert, um zu veranlassen, daß ein kleiner Teil des Gasvolumens in dem Strom durch die Düse und an dem Sensormittel vorbei mit einer Geschwindigkeit von zumindest 305 Metern je Minute strömt, und

ein Mittel vorgesehen ist, welches einen Alarmausgang liefert, falls das elektrische Signal einen vorgegebenen Wert überschreitet.

2. Vorrichtung nach Anspruch 1, bei welcher der Flußinduktor ein Gasflußinduktor (10, 14, 16, 18) ist.

3. Vorrichtung nach Anspruch 2, bei welchem der Gasflußinduktor einen ringförmigen Flußkanal (18) der Engstelle der Venturidüse (10) besitzt.

4. Vorrichtung nach einem der Ansprüche 1, 2 oder 3, bei welchem das Sensormittel eine Meßelektrode (20) im Eingangsabschnitt des Venturirohrs aufweist.

5. Vorrichtung nach einem der Ansprüche 1, 2 oder 3, bei welchem das Sensormittel eine poröse Elektrode (20 A) aufweist, die einem Teil des Strömungsquerschnittes gegenüberliegt.

6. Vorrichtung nach Anspruch 5, bei welcher die poröse Elektrode eine Gitterelektrode (20A) ist, die den Strömungsquerschnitt völlig überspannt und stromauf des Flußinduktors (18) gelegen ist.

7. Vorrichtung nach einem der vorgehenden Ansprüche, bei welcher der Querschnitt kleiner als $6,54\text{cm}^2$ ist.

8. Vorrichtung nach einem der vorgehenden Ansprüche, bei welcher die Strömungsgeschwindigkeit des Gases 610 bis 915 m je Minute beträgt.

9. Vorrichtung nach einem der vorgehenden Ansprüche, wobei innerhalb des Volumens (D) des Gases in Abstand von ihr zumindest eine, gleiche Vorrichtung angeordnet ist.

FIG. 1

FIG. 3

FIG. 2

EP 0 199 760 B1